# EUROPEAN PATENT SPECIFICATION

(11) **EP 3 282 715 B1**
(45) Date of publication and mention of the grant of the patent: **21.10.2020**
(21) Application number: 17185372.4
(22) Date of filing: 08.08.2017
(51) Int. Cl.: H04R 1/28, H04R 1/26

(54) **LOUDSPEAKER**
LAUTSPRECHER
HAUT-PARLEUR

(30) Priority: 09.08.2016 GB 201613687; 26.01.2017 GB 201701322
(43) Date of publication of application: 14.02.2018
(73) Proprietor: Studio17 Design Limited, Great Abington Cambridgeshire CB21 6AH (GB); Ellis, Christien, Great Chishill Hertfordshire SG8 8SN (GB)
(72) Inventor: MAY, Ashley David, Great Abington Cambridgeshire CB21 6AH (GB); ELLIS, Christien, Great Chishill Hertfordshire SG8 8SN (GB)
(74) Representative: Abraham, Richard

(56) References cited:
- GB-A- 2 310 104
- JP-A- H11 275 679
- US-A- 1 975 201
- US-A- 5 824 969
- US-A1- 2004 084 245
- US-A1- 2009 200 102
- US-A1- 2011 158 447
- US-A1- 2015 382 123
- US-A1- 2016 088 379

## Description

The present invention relates to a loudspeaker, particularly but not exclusively a loudspeaker configured to reproduce low frequency audio signals, and methods of manufacturing a loudspeaker/parts for a loudspeaker.

All loudspeaker designs face challenges in reproducing extended bass frequencies. Common approaches include sealed enclosure designs (typically incorporating large, sealed cabinets with high power amplifiers and high excursion bass drivers) or ported enclosure designs employing an enclosure with a port or vent to make use of the sound pressure within the loudspeaker enclosure to give increased bass response at a particular frequency to which the port is tuned.

Transmission line loudspeakers employ an extended open-ended passageway (often over 1 metre in length) configured to guide rearwardly radiated sound received from a bass driver to an outlet in the loudspeaker enclosure. If designed correctly, a transmission line allows a smooth, extended bass response with a shallow roll of compared to a ported enclosure. However, transmission line loudspeakers can be difficult to design and to perfect, owing to a number of side effects from creating a long passageway within a cabinet. Mass manufacturing practicalities mean that transmission lines are often folded channels formed in a plane with 90 degree or 180 degree turns within a rectangular cabinet. Typically such transmission lines generate irregular air flow together with unwanted reflections, phase cancellation or reinforcement.

US 2004/084245 discloses loudspeaker apparatus for increasing the quality of sound from an acoustic source comprising a hollow enclosure, an acoustic source, a helical acoustic guide, a pair of acoustic inlet openings, a pair of rear acoustic exit openings, and a pair of acoustic paths, wherein the acoustic inlet openings separate acoustic waves from the acoustic source and direct the acoustic waves the length of the acoustic paths to the rear acoustic exit openings in order to increase the quality of sound, and especially bass sound, from the acoustic source.

The present applicant has identified the need for an improved loudspeaker which overcomes, or at least alleviates, some of the disadvantages associated with prior art designs.

In accordance with a first aspect of the present invention, there is provided a loudspeaker as defined in appendant independent claim 1, to which reference should now be made.

In this way, a loudspeaker is provided with a coiled passageway extending in three-dimensions enabling provision of an elongate tortuous path with smooth bends extending within the confines of the enclosure.

In one embodiment the bass driver (or "woofer") forms part of a multi-way loudspeaker.

In one embodiment, the coiled non-planar passageway defines an airflow path comprising a section (e.g. a series of sections) with components extending (e.g. simultaneously extending): radially or circumferentially relative to the central axis; and longitudinally relative to the central axis.

In one embodiment, the central axis is substantially aligned with or substantially parallel to a drive axis of the bass driver.

In one embodiment, the coiled non-planar passageway has a substantially constant cross-sectional area along its longitudinal length.

In one embodiment, the chamber is tapered (e.g. decreasing in cross-sectional area with increased axial distance from the bass driver).

In one embodiment, the diaphragm of the bass driver is mounted in the chamber.

In one embodiment, the chamber has a cross-sectional area (at least at a point closest to the bass driver) substantially equal to the cross-sectional area of the diaphragm.

To avoid or at least alleviate interference effects, the loudspeaker may be configured to radiate sound from the transmission line outlet substantially in phase with the forward radiated sound from the bass driver.

In one embodiment, the annular opening of the transmission line outlet is substantially concentric with the bass driver.

In a first embodiment, the driver outlet is provided by the annular opening of the transmission line outlet (e.g. the driver and transmission line share a common annular outlet).

In a second embodiment, the driver outlet comprises a (e.g. further) annular opening.

In one embodiment, the further annular opening of the driver outlet is substantially concentric with the bass driver axis/annular opening of the transmission line outlet (e.g. with the transmission line outlet enclosing the driver outlet).

In one embodiment, the loudspeaker comprises at least one further driver (e.g. high frequency or mid-range driver) mounted within the annular opening of the driver outlet and/or transmission line outlet.

The cross-sectional area of the passageway may be smaller than the cross-sectional area of a diaphragm of the bass driver.

In one embodiment, the coiled non-planar passageway defines an entrance positioned along the drive axis of the bass driver and facing the rear of the bass driver (e.g. facing the diaphragm of the bass driver).

In one embodiment, enclosure may seal the bass driver (e.g. the coiled non-planar passageway may be closed or sealed at its end furthest from the bass driver).

The enclosure may comprise a body portion into which the coiled non-planar passageway extends, with the cross-sectional area of tapered body portion decreasing with increasing distance from the bass driver.

In a first set of embodiments, the coiled non-planar passageway comprises a helical passageway defining a path extending circumferentially around the central axis and longitudinally along the central axis.

In this way, airflow through the enclosure is guided to flow in smooth corkscrew-like path devoid of any folds (i.e. foldless path).

In one embodiment, the enclosure comprises outer shell and an inner shell, and the helical passageway is defined by a helically projecting wall extending between inner surfaces of the outer shell and outer surfaces of the inner shell.

In a second set of embodiments, the coiled non-planar passageway comprises an elongate substantially annular passageway folded (e.g. smoothly folded) in two orthogonal planes at one or more points along its longitudinal length to form a plurality of concentric passageway ways. The substantially annular passageway may be continuous between opposed circumferentially spaced sides of the passageway or discontinuous (e.g. formed by a plurality of discrete passageways sections circumferentially spaced around the central axis to form the annular passageway). In this way, a path is created that coils backward and forward when viewed in cross-section.

In one embodiment, the substantially annular passageway is folded at a plurality of points along its length (e.g. to form a series of straights connected by bends).

In the case of a loudspeaker with at least one further driver (e.g. forward firing driver), the at least one further driver may be mounted to the central baffle part.

In one embodiment, the enclosure including the coiled non-planar passageway is formed using an additive manufacturing process. The additive manufacturing process may, as a non-exhaustive example, be a Fused Deposition Modelling (FDM) process, a Stereo Lithography (SLA) process or a Selective Laser Sintering (SLS) process.

In one embodiment, the enclosure is formed from powdered material selectively fused together as part of the additive manufacturing process.

In one embodiment, the solid enclosure body is formed as a single part.

In one embodiment, the solid enclosure body is formed as a plurality of parts joined together in a joining step.

In one embodiment, the loudspeaker includes at least one acoustic damping region in the coiled non-planar passageway, the at least one acoustic damping region comprising an air permeable solid structure comprising a network of interconnected voids extending substantially through the solid structure (e.g. with the network extending substantially in three dimensions) and defining a damped flow path through the solid structure.

In one embodiment, the at least one damping region is integrally formed in the coiled non-planar passageway (e.g. formed during the additive manufacturing process used to construct the enclosure).

In one embodiment, each void is connected to a plurality of openings on first and second surfaces of the solid structure (first and second opposed surfaces positioned at leading and trailing ends of the solid structure relative to a flow path through the coiled non-planar passageway).

In one embodiment, the solid structure has a three-dimensional lattice structure.

In one embodiment, the solid structure substantially spans the cross-sectional width of the coiled non-planar passageway (e.g. so that substantially all incident air flow must pass through the acoustic damping region).

In one embodiment, each void is of substantially identical volume.

In another embodiment, the volume of each void varies with location within the solid body. For example, the volume of the voids may gradually decrease with increased distance along the flow path. In another embodiment, the volume of the voids may gradually increase with increased distance along the flow path. In this way, a variable density damping region may be created.

In one embodiment, the at least one damping region is formed using an additive manufacturing process. The additive manufacturing process may, as a non-exhaustive example, be a Fused Deposition Modelling (FDM) process, a Stereo Lithography (SLA) process or a Selective Laser Sintering (SLS) process.

In one embodiment, the at least one damping region is formed from powdered material selectively fused together as part of the additive manufacturing process.

In accordance with a second aspect of the present invention, there is provided a method of manufacturing a loudspeaker in accordance with any embodiment of the first aspect of the present invention, comprising: forming a solid enclosure body using an additive manufacturing process; wherein the enclosure body is formed as a single part with the coiled non-planar passageway for receiving rearwardly radiated sound extending through the enclosure body.

The additive manufacturing process may, as a non-exhaustive example, be a Fused Deposition Modelling (FDM) process, a Stereo Lithography (SLA) process or a Selective Laser Sintering (SLS) process.

In one embodiment, the solid enclosure body is formed from powdered material selectively fused together as part of the additive manufacturing process.

Embodiments of the present invention will now be described by way of example with reference to the accompanying drawings in which:
Figure 1A is a schematic perspective view of a loudspeaker in accordance with a first embodiment of the present invention;
Figure 1B is a schematic plan view of the loudspeaker of Figure 1A;
Figure 1C is a schematic cross-sectional side view of the loudspeaker of Figure 1A illustrating a first part of a flow path through the enclosure;
Figure ID is a schematic partially cut-away side view of the loudspeaker of Figure 1A showing a second part of a flow path through the enclosure;
Figure 2A is a schematic perspective view of a loudspeaker in accordance with a second embodiment of the present invention;
Figure 2B is a schematic plan view of the loudspeaker of Figure 2A;
Figure 2C is a schematic cross-sectional side view of the loudspeaker of Figure 2A illustrating a first part of a flow path through the enclosure;
Figure 2D is a schematic partially cut-away side view of the loudspeaker of Figure 2A showing a second part of a flow path through the enclosure;
Figures 3A-3E illustrate steps in a method of manufacturing the loudspeaker of Figure 1A highlighting novel constructional details of the enclosure;
Figure 4A is a schematic perspective cross-sectional view of a loudspeaker;
Figure 4B is a schematic perspective cross-sectional view of the loudspeaker of Figure 4A showing a flow path through the enclosure;
Figure 4C is a schematic cross-sectional view of the loudspeaker of Figure 4A showing the flow path through the enclosure;
Figure 5A is a schematic perspective cross-sectional view of a loudspeaker and loudspeaker insert before assembly is completed; and
Figure 5B is a schematic perspective cross-sectional view of the loudspeaker and loudspeaker insert of Figure 5A after assembly is completed.

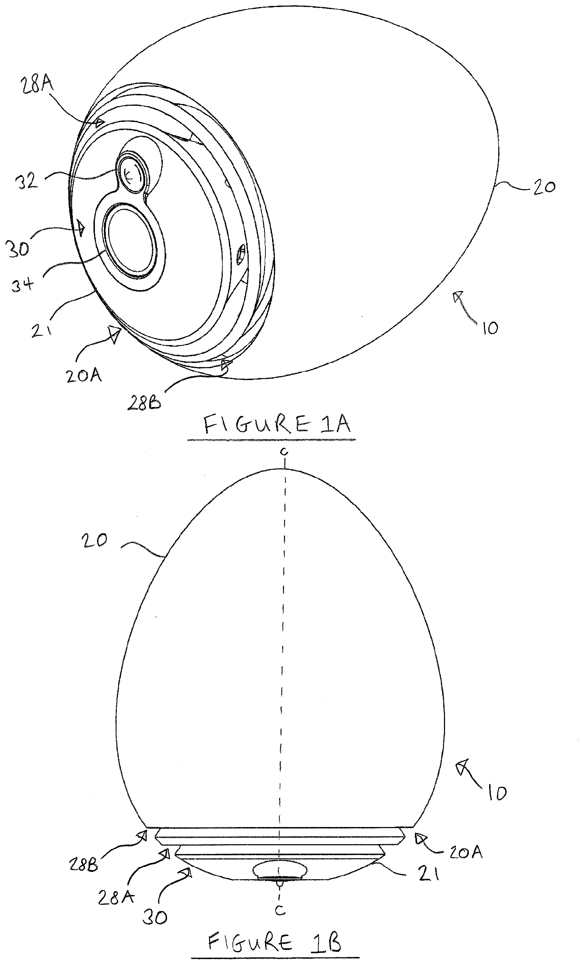

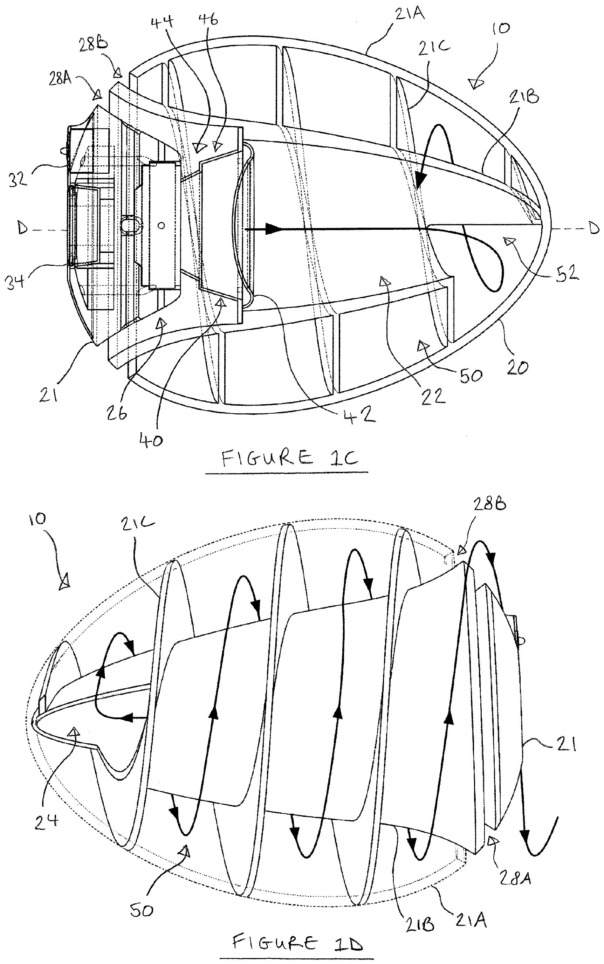

Figures 1A-1D show a multi-way transmission line loudspeaker system 10 comprising a substantially oviform enclosure 20 formed by an additive manufacturing process (discussed in more detail below) and defining a central axis C, a substantially frusto-conical central front baffle 21 mounted to a front face 20A of enclosure 20, and a set of electro-acoustic drivers 30 mounted to central front baffle 21.

Drivers 30 include a high frequency driver 32, a mid-range driver 34 and a low frequency driver 40.

Drivers 32, 34 are positioned in a conventional forward facing orientation to direct sound output from the front of the drivers direct into an external listing area (e.g. listen's room) with rearward radiated sound being received by sealed volumes in the driver casing/central front baffle 21. Mid-range driver 34 has a drive axis co-axial with central axis C; high frequency driver 32 has a raised drive axis radially spaced from but parallel to central axis C. High frequency driver 32 and mid-range drive may take a variety of forms and are not discussed in detail.

As illustrated in Figure 1C, driver 40 is mounted to fire rearwardly into the enclosure 20 and defines a drive axis D co-axial with central axis C. Driver 40 comprises a diaphragm 42 and an open frame magnet assembly 44 including an aperture arrangement 46, with diaphragm 42 located at an entrance to a central tapered chamber 22 formed in enclosure 20. As illustrated, central tapered chamber 22 extends substantially parallel to drive axis D from diaphragm 42 to an opening 24 at a rear end of enclosure 20 and has an initial cross-sectional area substantially equal to the cross-sectional area of diaphragm 42 and gradually decreases in cross-sectional area with increased axial distance from driver 40. The rear output from driver 40 is delivered to the eternal listening area via aperture arrangement 46 in the open frame magnet assembly 44 and an annular duct 26 formed by the spacing between central front baffle 21 and enclosure 20 leading to an annular driver outlet 28A provided on a front face 20A of enclosure 20 concentric with drive axis D.

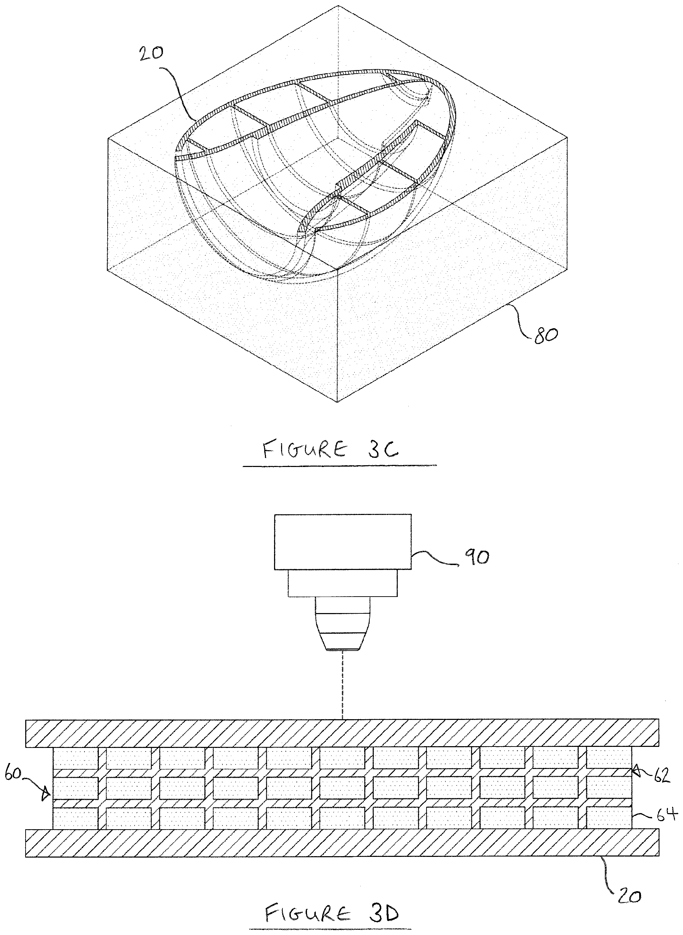

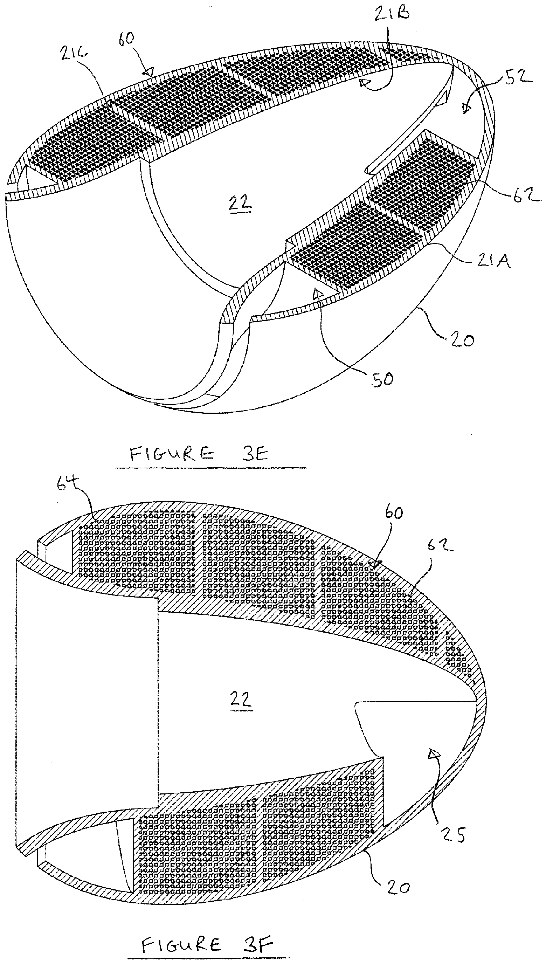

As illustrated in Figures 1C and ID, enclosure 20 comprises outer shell 21A and an inner shell 21B with a non-planar helical passageway 50 defined therebetween by a helically projecting wall 21C extending between inner surfaces 25A of the outer shell 21A and outer surfaces 25B of the inner shell 21B. Non-planar helical passageway 50 comprises an entrance 52 positioned at opening 24 and defines a three-dimensional air flow path extending simultaneously circumferentially around central axis C and longitudinally along the central axis C for guiding rearwardly radiated sound received from driver 40 from the rear of enclosure 20 to an annular transmission line outlet 28B provided on front face 20A of enclosure 20 concentric with and encircling annular driver outlet 28A. Optionally, non-planar helical passageway may be formed with an integral acoustic damping region (discussed in more detail below in connection with Figures 3D-3F).

In use, diaphragm 42 reciprocates backwards and forwards along the drive axis D. Sound radiated in a forward direction proceeds direct into the listening area in front of the loudspeaker 10 via aperture arrangement 46 in open frame magnet assembly 44 and duct 26 leading to annular driver outlet 28A. Sound radiated in a rearward direction (from the front face of diaphragm 42) passes into central tapered chamber 22 before entering non-planar helical passageway 50 via entrance 52. Non-planar helical passageway 50 acts as a transmission line to guide sound waves in a controlled manner and deliver sound from annular transmission line outlet 28B substantially in phase with the forward radiated sound from driver 40. Advantageously, the non-planar curved profile of the flow path acts to reduce unwanted reflections and wave interference whilst providing a suitable length of waveguide to achieve an effective transmission line performance.

Advantageously, oviform enclosure 20 has no flat surfaces and is curved in both planes. This not only helps suppress the build-up of standing waves, but provides for an extremely rigid structure. Helically projecting wall 21C acts to brace inner and outer shells 21B, 21A to further reinforce the structure with careful selection of wall thickness helping to keep the enclosure structure inert.

Further advantageously, central front baffle 21 is partially decoupled from enclosure 20 to help prevent small cabinet vibrations affecting the performance of drivers 32 and 34.

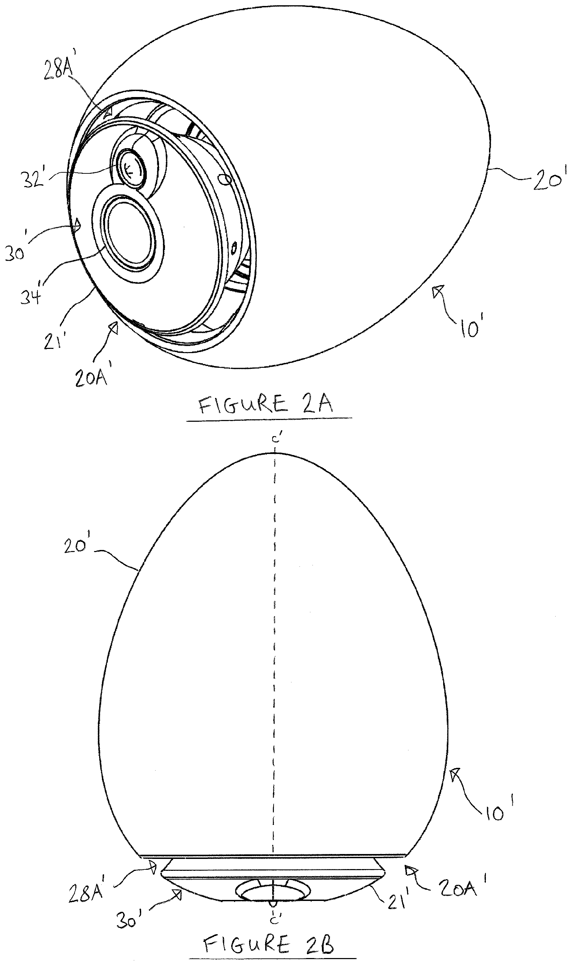

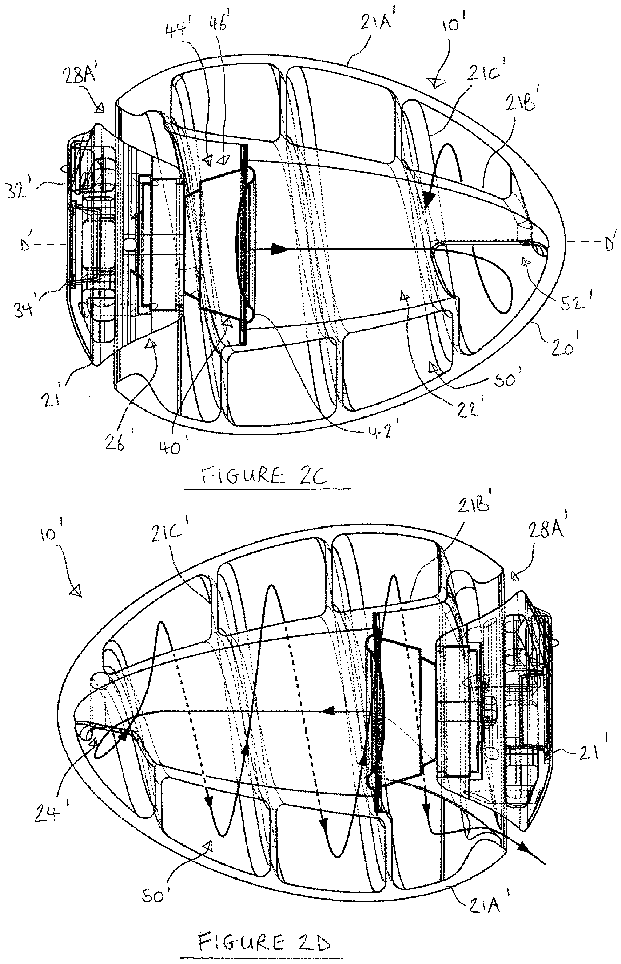

Figures 2A-2D show a multi-way transmission line loudspeaker system 10' according to a second embodiment of the present invention which is based closely on loudspeaker system with corresponding features being labelled accordingly. Loudspeaker system 10' differs from loudspeaker 10 in that instead of including separate annular outlets for driver 40' and helical passageway 50', driver 40' and helical passageway 50' share a single annular outlet 28A'. Depending upon the design of the loudspeaker system this single annular outlet arrangement may provide an acoustic improvement.

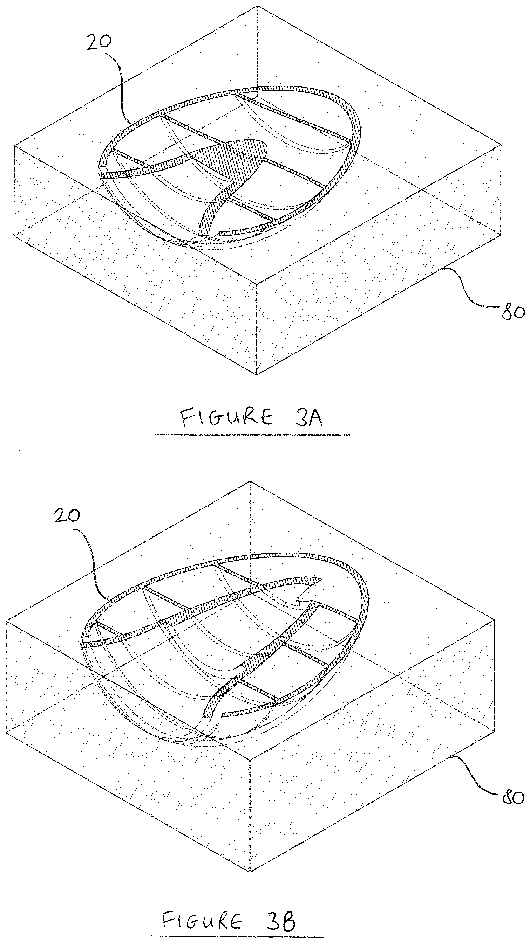

Figures 3A-3F illustrate a method of manufacturing loudspeaker 10 (the method also being suitable for manufacturing loudspeaker 10').

As illustrated in Figures 3A-3D, enclosure 20 (including comprises outer shell 21A, inner shell 21B and helically projecting wall 21C which together form central tapered chamber 22 and non-planar helical passageway 50) is formed in a series of layers using an additive manufacturing process.

The term additive manufacturing is used to define a host of manufacturing processes whereby material is deposited in layers to create three-dimensional objections from computer data. This allows the creation of complex three-dimensional forms that would be difficult or not commercially feasible using traditional methods like moulding, casting or machining. Typical additive manufacturing processes include:
Fused Deposition Modelling (FDM) in which a print head deposits molten plastics material in successive layers to build a three-dimensional geometry;
Stereo Lithography (SLA) in which light (typically UV light) is used to cure a photosensitive resin (e.g. photopolymer resin) in successive layers to build a three-dimensional geometry; and
Selective Laser Sintering (SLS) in which a laser is used to sinter successive layers of plastics or metal powder to build a three-dimensional geometry.

Advantageously, additive manufacturing simplifies the creation of passageways with a complex geometry such as the non-planer helical passageway 50.

In this instance, it is proposed that enclosure 20 may formed by a Selective Laser Sintering process in which successive layers of powder 80 are deposited and sintered by a laser 90 under computer control as illustrated in the sequence shown in Figures 3A, 3B and 3C. The choice of Selective Laser Sintering specifically allows creation of parts form glass filled Nylon, which has excellent structure rigidity/high flexural strength and hence is ideally suited for an acoustic enclosure.

In this embodiment, the enclosure is constructed entirely from glass filed Nylon powder and formed as a single part to provide superior structural integrity. However, the enclosure may be formed from other materials and using other techniques, and may be built from smaller component parts joined together.

As illustrated in Figures 3D-3F, the additive manufacturing process may be used to additionally form an integral acoustic damping region 60 in non-planar helical passageway 50. Acoustic damping region comprises an air permeable solid structure 62 comprising a network of interconnected voids 64 extending in three dimensional through the solid structure to form a damped flow path. As illustrated, structure 62 substantially spans the cross-sectional width of non-planer helical passageway 50 and extends substantially along the length of the passageway. Each void of the network of interconnected voids 64 is connected to a plurality of openings (not shown) positioned at leading and trailing ends of the structure 62 relative to a flow path through passageway 50 so that air can flow smoothly through structure 62 as it passes along passageway 50. Typically the method will comprise removing any unfused material remaining in the voids after the additive manufacturing step via these openings.

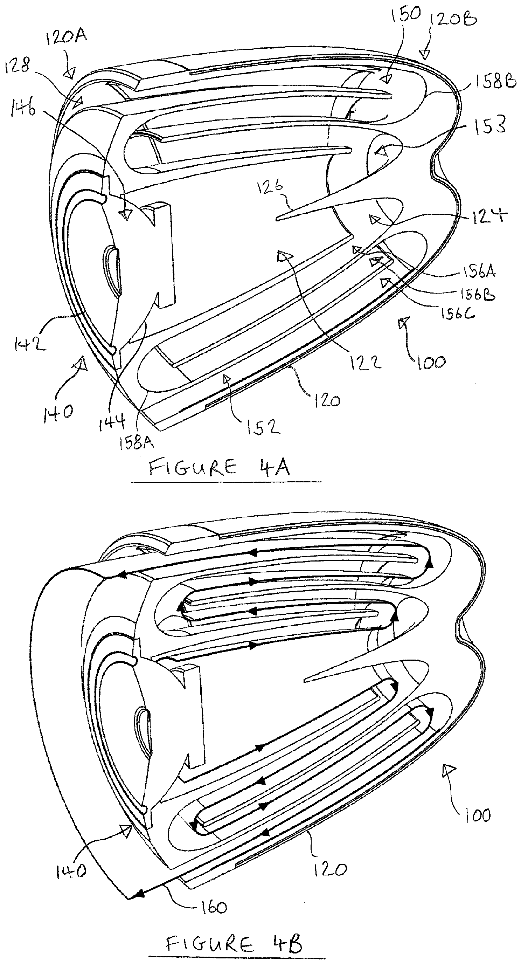

Figures 4A-C show a transmission line loudspeaker 100 comprising a substantially oviform enclosure 120 (again formed using an additive manufacturing process, for example Selective Laser Sintering using glass filled Nylon powder) defining a central axis C' and a driver 140 mounted on a front face 120A of the enclosure 120. Driver 140 may be a low frequency driver or a multi-range driver covering a low frequency range.

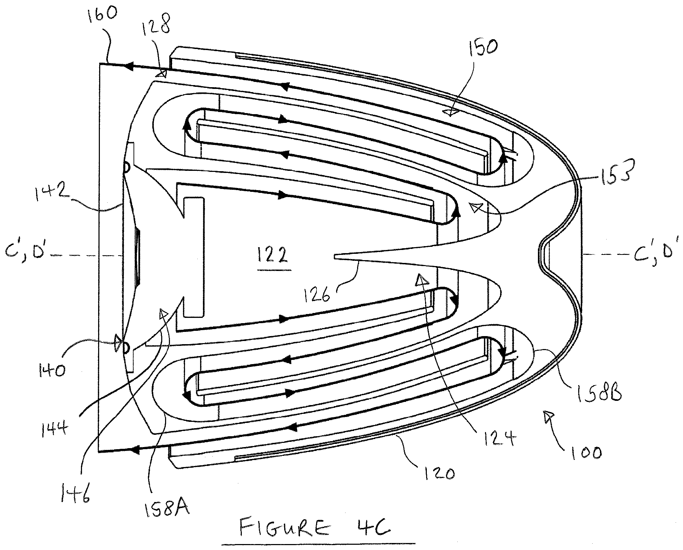

Driver 140 is mounted in a conventional manner to fire in a forward direction into a listening area and defines a drive axis D' co-axial with central axis C'. Driver 140 comprises a diaphragm 142 and an open frame magnet assembly 144 including an aperture arrangement 146. Driver 140 is positioned so that open frame magnet assembly 144 is mounted inside a central tapered chamber 122 formed in enclosure 120, tapered chamber 122 extending substantially parallel to the driver axis D from driver 140 to an annular opening 124 provided at a rear end of enclosure 120 and facing driver 140. As illustrated in Figure 4C, central tapered chamber 122 has an initial cross-sectional area substantially equal to the cross-sectional area of the diaphragm decreasing in cross-sectional area with increased axial distance from the driver 140. A conical flow splitter 126 formed at the rear end of central tapered chamber 122 smoothly directs airflow into annular opening 124.

Enclosure 120 comprises defines a coiled passageway in the form of a folded non-planar passageway 150 comprising an elongate substantially annular passageway 152 smoothly folded in two orthogonal planes a plurality of points along its longitudinal length to form a plurality of concentric passageway ways parts 156A, 156B, 156C of sequentially increasing radius. As illustrated, one front bend 158A and one rear bend 158B generate the three distinct paths 156A, 156B, 156C in three distinct radial layers. When viewed in cross-section the passageway 150 can be seen to coil forward and backward to form a coiled profile.

Non-planar folded passageway 150 defines comprises an entrance 153 positioned along drive axis D' and facing the rear of driver 140 and defines a non-planar path extending circumferentially around the central axis and longitudinally along the central axis for guiding rearwardly radiated sound from the low frequency driver 140 from a rear part 120B of enclosure 120 to an annular transmission line outlet 128 provided on the front face 120A of the enclosure 120 concentric with and encircling diaphragm 142.

Non-planar folded passageway 150 defines an annular airflow path 160 comprising a series of sections with components between bends 158A and 158B simultaneously extending circumferentially relative to the central axis and longitudinally relative to the central axis.

In use, diaphragm 142 reciprocates backwards and forwards along the drive axis D'. Sound radiated in a rearward direction (from the rear face of diaphragm 142) passes via aperture 146 in open frame magnet assembly 144 into tapered chamber 122 before entering non-planar folded passageway 150. Like non-planar helical passageway 50, non-planar folder passageway 150 acts as a transmission line to guide sound waves in a controlled manner and deliver sound from an annular transmission line outlet 128 substantially in phase with the forward radiated sound from driver 140.

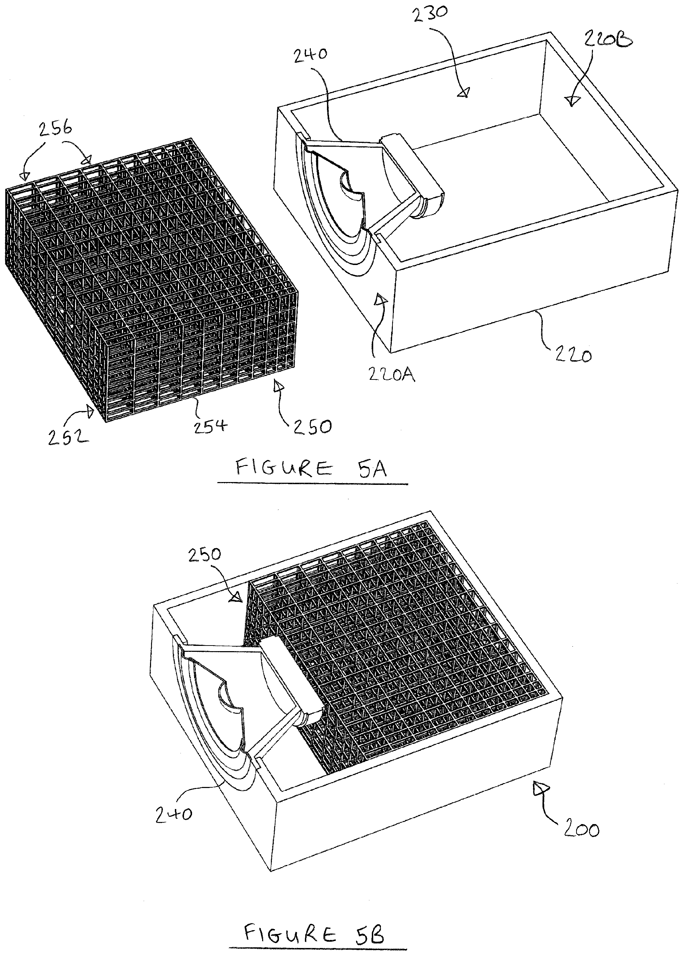

Figure 5A and 5B illustrate steps in the manufacture of a loudspeaker 200 comprising a box-shaped enclosure 220 (formed using conventional cabinet making techniques) defining a chamber 230 and including a driver 240 mounted on a front face 220A of the enclosure 220.

Many conventional loudspeakers employ acoustic wadding to supress sound reflections within the loudspeaker enclosure, typically acoustic wadding used for this purpose comprises acoustic foam sheets, synthetic wadding or lamb's wool. However, installation is often done by manually loosening the material and this makes it difficult to repeat perfectly. Furthermore, the wadding can migrate within the cabinet over time, leading to acoustic differences between loudspeakers.

In the present example, acoustic wadding is replaced by an acoustic damping insert 250 comprising an air permeable solid structure 252 formed as a single part by an additive manufacturing process (e.g. Deposition Modelling (FDM) process, a Stereo Lithography (SLA) process or a Selective Laser Sintering (SLS) process). In one example, structure 252 is formed by Selective Laser Sintering a plastics (e.g. glass filled Nylon) powder.

Structure 252 comprises an open lattice structure 254 defining a three-dimensional network of interconnected cuboid voids 256 extending substantially through the solid structure and defining a damped flow path through the structure 252. Structure 252 is sized to substantially fill a volume of chamber 230 spaced from driver 240 so that substantially all incident air flow into the chamber from the rear of driver 240 must pass through the acoustic damping region 250 to reach a rear inner face of the enclosure 220B.

As shown, the volume of the voids gradually decrease with increased distance along the flow path from the front face 220A of the enclosure 220 towards rear inner face 220B of the enclosure. In this way, a variable density damping region is created inside chamber 230. The cell structure may be linear or non-linear depending on the application and may be of variable density throughout the structure.

The cell structure may be as large as the enclosure itself or as fine as acoustic foam. The size of the cells may transition any number of times based on the type, size and shape of the loudspeaker enclosure.

This process will allowed improved damping of a loudspeaker enclosure through optimisation of cell structure and is accurately repeatable when produced across multiple loudspeaker units.

As illustrated in Figure 5B, chamber 230 is configured to receive the acoustic damping insert 250 during a step in manufacture.

## Claims

1. A loudspeaker (10)(10') comprising:
an enclosure (20)(20') defining a central axis; and
a bass driver (40)(40') being operable to radiate sound in a forward direction and a rearward direction relative to the enclosure (20)(20');
wherein the enclosure (20)(20') is configured to receive sound radiated in the rearward direction from the bass driver (40)(40') and defines a coiled non-planar passageway (50)(50') for guiding rearwardly radiated sound;
wherein:
the coiled non-planar passageway guides sound received by the passageway at a rearward part of the enclosure (20)(20') to a front part of the enclosure (20)(20'), the coiled non-planer passageway (50)(50') being connected to the bass driver (40)(40') by a chamber (22)(22'); and
the loudspeaker (10)(10') further comprises:
a central baffle part (21)(21') mounted to a front face (20A)(20A') of the enclosure (20)(20'), the bass driver (40)(40') being mounted to the central baffle part (21)(21');
a transmission line outlet for allowing sound that has passed through the coiled non-planar passageway (50)(50') to escape the enclosure (20)(20'), the transmission line outlet comprising an annular opening (28B)(28A') provided on the front face (20A)(20A') of the enclosure (20)(20'); and
a driver outlet (28A)(28A') provided on the front face (20A)(20A') of the enclosure (20)(20') for transmitting sound radiated from the bass driver (40)(40') in the forward direction to enter a listening area external to the enclosure (20)(20').

2. A loudspeaker (10)(10') according to claim 1, wherein:
the bass driver (40)(40') is mounted with a diaphragm (42)(42') orientated to fire rearwardly relative to the enclosure (20)(20'); and
the chamber (22)(22') extends substantially parallel to the central axis from the diaphragm (42)(42') to an opening (24)(24') at a rear end of the enclosure (20)(20').

3. A loudspeaker (10)(10') according to claim 1 or claim 2, wherein the loudspeaker (10)(10') comprises a forward-firing high frequency or mid-range driver (32, 34)(32', 34') mounted within the annular opening (28B)(28A') of the transmission line outlet.

4. A loudspeaker (10)(10') according to claim 3, wherein the forward-firing high frequency or mid-range driver (32, 34)(32', 34') is mounted to the central baffle part (21)(21').

5. A loudspeaker (10') according to any of the preceding claims, wherein the driver outlet is provided by the annular opening (28A') of the transmission line outlet.

6. A loudspeaker (10)(10') according to claim 1, wherein the coiled non-planar passageway (50)(50') defines an airflow path comprising a section with components extending: radially or circumferentially relative to the central axis; and longitudinally relative to the central axis.

7. A loudspeaker (10)(10') according to any of the preceding claims, wherein the annular opening (28B)(28A') of the transmission line outlet is substantially concentric with the bass driver (40)(40').

8. A loudspeaker (10)(10') according to any of the preceding claims, wherein the enclosure (20)(20') comprises a body portion into which the coiled non-planar passageway (50)(50') extends, with the cross-sectional area of tapered body portion decreasing with increasing distance from the bass driver (40)(40').

9. A loudspeaker (10)(10') according to any of the preceding claims, wherein the coiled non-planar passageway (50)(50') comprises a helical passageway defining a path extending circumferentially around the central axis and longitudinally along the central axis.

10. A loudspeaker (10)(10') according to claim 9, wherein the enclosure (20)(20') comprises outer shell (21A) and an inner shell (21B), and the helical passageway is defined by a helically projecting wall (21C) extending between inner surfaces (25A) of the outer shell (21A) and outer surfaces (25B) of the inner shell (21B).

11. A loudspeaker (10)(10') according to any of claims 1-8, wherein the coiled non-planar passageway (50)(50') comprises an elongate substantially annular passageway folded in two orthogonal planes at one or more points along its longitudinal length to form a plurality of concentric passageway ways.

12. A loudspeaker (10)(10') according to claim 11, wherein the substantially annular passageway is folded at a plurality of points along its length.

13. A loudspeaker (10)(10') according to any of the preceding claims, wherein the enclosure (20)(20') including the coiled non-planar passageway (50)(50') are formed using an additive manufacturing process.

14. A loudspeaker (10)(10') according to claim 13, wherein the loudspeaker (10)(10') includes at least one acoustic damping region (60) in the coiled non-planar passageway (50)(50'), the at least one acoustic damping region (60) comprising an air permeable solid structure (62) comprising a network of interconnected voids (64) extending substantially through the solid structure and defining a damped flow path through the solid structure.

15. A loudspeaker (10)(10') according to claim 14, wherein the at least one damping region (60) is integrally formed in the coiled non-planar passageway (50)(50').

16. A method of manufacturing a loudspeaker (10)(10') as defined in any of the preceding claims, comprising:
forming the enclosure (20)(20') using an additive manufacturing process;
wherein the enclosure (20)(20') is formed as a single part with the coiled non-planar passageway (50)(50') for receiving rearwardly radiated sound extending through the enclosure body (20)(20').

## Patentansprüche

1. Lautsprecher (10)(10'), umfassend:
ein Gehäuse (20)(20'), das eine zentrale Achse definiert; und
einen Basstreiber (40)(40'), der so betriebsfähig ist, dass er Schall in eine Vorwärtsrichtung und in eine Rückwärtsrichtung im Verhältnis zu dem Gehäuse (20)(20') abstrahlt;
wobei das Gehäuse (20)(20') für den Empfang von Schall gestaltet ist, der von dem Basstreiber (40)(40') in die Rückwärtsrichtung abgestrahlt wird, und wobei das Gehäuse einen gewundenen, nicht planaren Durchgang (50)(50') zum Leiten des nach hinten abgestrahlten Schalls definiert;
wobei:
der gewundene, nicht planare Durchgang von dem Durchgang an einem hinteren Teil des Gehäuses (20)(20') empfangenen Schall zu einem vorderen Teil des Gehäuses (20)(20') leitet, wobei der gewundene, nicht planare Durchgang (50)(50') durch eine Kammer (22)(22') mit dem Basstreiber (40)(40') verbunden ist; und wobei
der Lautsprecher (10)(10') ferner folgendes umfasst:
einen zentralen Schallwandteil (21)(21'), der an einer Vorderseite (20A)(20A') des Gehäuses (20)(20') angebracht ist, wobei der Basstreiber (40)(40') an dem zentralen Schallwandteil (21)(21') angebracht ist;
einen Übertragungsleitungsausgang, der es ermöglicht, dass durch den gewundenen, nicht planaren Durchgang (50)(50') getretener Schall aus dem Gehäuse (20)(20') austreten kann, wobei der Übertragungsleitungsausgang eine ringförmige Öffnung (28B)(28A') umfasst, die an der Vorderseite (20A)(20A') des Gehäuses (20)(20') bereitgestellt ist; und
einen Treiberausgang (28A)(28A'), der an der Vorderseite (20A)(20A') des Gehäuses (20)(20') bereitgestellt ist, um von dem Basstreiber (40)(40') in die Vorwärtsrichtung abgestrahlten Schall so zu übermitteln, dass er in einen Hörbereich außerhalb des Gehäuses (20)(20') eintritt.

2. Lautsprecher (10)(10') nach Anspruch 1, wobei:
der Basstreiber (40)(40') mit einer Membran (42)(42') verbunden ist, die so ausgerichtet ist, dass sie im Verhältnis zu dem Gehäuse (20)(20') nach hinten abstrahlt; und wobei
sich die Kammer (22)(22') im Wesentlichen parallel zu der zentralen Achse von der Membran (42)(42') zu einer Öffnung (24)(24') an einem hinteren Ende des Gehäuses (20)(20') erstreckt.

3. Lautsprecher (10)(10') nach Anspruch 1 oder Anspruch 2, wobei der Lautsprecher (10)(10') einen nach vorne abstrahlenden Hochfrequenz- oder Mid-Range-Treiber (32, 34)(32', 34') umfasst, der in der ringförmigen Öffnung (28B)(28A') des Übertragungsleitungsausgangs angebracht ist.

4. Lautsprecher (10)(10') nach Anspruch 3, wobei der nach vorne abstrahlende Hochfrequenz- oder Mid-Range-Treiber (32, 34)(32', 34') an dem zentralen Schallwandteil (21)(21') angebracht ist.

5. Lautsprecher (10') nach einem der vorstehenden Ansprüche, wobei der Treiberausgang durch die ringförmige Öffnung (28A') des Übertragungsleitungsausgangs bereitgestellt wird.

6. Lautsprecher (10)(10') nach Anspruch 1, wobei der gewundene, nicht planare Durchgang (50)(50') einen Luftströmungspfad definiert, der einen Abschnitt mit Komponenten umfasst, die sich wie folgt erstrecken: radial oder umfänglich im Verhältnis zu der zentralen Achse; und longitudinal im Verhältnis zu der zentralen Achse.

7. Lautsprecher (10)(10') nach einem der vorstehenden Ansprüche, wobei die ringförmige Öffnung (28B)(28A') des Übertragungsleitungsausgangs im Wesentlichen konzentrisch zu dem Basstreiber (40)(40') ist.

8. Lautsprecher (10)(10') nach einem der vorstehenden Ansprüche, wobei das Gehäuse (20)(20') einen Körperabschnitt umfasst, in den sich der gewundene, nicht planare Durchgang (50)(50') erstreckt, wobei die Querschnittsfläche des konischen Körperabschnitts mit zunehmender Entfernung zu dem Basstreiber (40)(40') abnimmt.

9. Lautsprecher (10)(10') nach einem der vorstehenden Ansprüche, wobei der gewundene, nicht planare Durchgang (50)(50') einen schneckenförmigen Durchgang umfasst, der einen Pfad definiert, der sich umfänglich um die zentrale Achse und longitudinal entlang der zentralen Achse erstreckt.

10. Lautsprecher (10)(10') nach Anspruch 9, wobei das Gehäuse (20)(20') eine äußere Schale (21A) und eine innere Schale (21B) umfasst, und wobei der schneckenförmige Durchgang durch eine schneckenförmig vorstehende Wand (21C) definiert ist, die sich zwischen inneren Oberflächen (25A) der äußeren Schale (21A) und äußeren Oberflächen (25B) der inneren Schale (21B) erstreckt.

11. Lautsprecher (10)(10') nach einem der Ansprüche 1 bis 8, wobei der gewundene, nicht planare Durchgang (50)(50') einen länglichen, im Wesentlichen ringförmigen Durchgang umfasst, der an einer oder mehreren Stellen entlang dessen longitudinalen Länge in zwei orthogonale Ebenen gefaltet ist, so dass eine Mehrzahl konzentrischer Durchgangswege gebildet wird.

12. Lautsprecher (10)(10') nach Anspruch 11, wobei der im Wesentlichen ringförmige Durchgang an mehreren Stellen entlang dessen Länge gefaltet ist.

13. Lautsprecher (10)(10') nach einem der vorstehenden Ansprüche, wobei das Gehäuse (20)(20') einschließlich des gewundenen, nicht planaren Durchgangs (50)(50') unter Verwendung eines additiven Fertigungsverfahrens gebildet werden.

14. Lautsprecher (10)(10') nach Anspruch 13, wobei der Lautsprecher (10)(10') mindestens einen schalldämpfenden Bereich (60) in dem gewundenen, nicht planaren Durchgang (50)(50') aufweist, wobei der mindestens eine schalldämpfende Bereich (60) eine luftdurchlässige feste Struktur (62) umfasst, die ein Netz aus miteinander verbundenen Poren (64) umfasst, die sich im Wesentlichen durch die feste Struktur erstrecken und einen gedämpften Strömungspfad durch die feste Struktur definieren.

15. Lautsprecher (10)(10') nach Anspruch 14, wobei der mindestens eine dämpfende Bereich (60) integral in dem gewundenen, nicht planaren Durchgang (50)(50') ausgebildet ist.

16. Verfahren zur Herstellung eines Lautsprechers (10)(10') nach einem der vorstehenden Ansprüche, umfassend:
Bilden des Gehäuses (20)(20') unter Verwendung eines additiven Fertigungsprozesses;
wobei das Gehäuse (20)(20') als ein Teil mit dem gewundenen, nicht planaren Durchgang (50)(50') für den Empfang von nach hinten abgestrahltem Schall, der sich durch den Gehäusekörper (20)(20') erstreckt, ausgebildet ist.

## Revendications

1. Haut-parleur (10)(10') comprenant :
une enceinte (20)(20') définissant un axe central ; et
un haut-parleur de basses (40)(40') permettant de rayonner le son vers l'avant et vers l'arrière par rapport à l'enceinte (20)(20') ;
l'enceinte (20)(20') étant conçue pour recevoir le son rayonné vers l'arrière par le haut-parleur de graves (40)(40') et définissant un passage non plan enroulé (50)(50') pour guider le son rayonné vers l'arrière ;
le passage non plan enroulé guidant le son reçu par le passage à une partie arrière de l'enceinte (20)(20') vers une partie avant de l'enceinte (20)(20'), le passage non plan enroulé (50)(50') étant relié au haut-parleur de basses (40)(40') par une chambre (22)(22') ; et
le haut-parleur (10)(10') comprenant en outre :
une partie de baffle centrale (21)(21') montée sur une face avant (20A)(20A') de l'enceinte (20)(20'), le haut-parleur de graves (40)(40') étant monté sur la partie de baffle centrale (21)(21') ;
une sortie de ligne de transmission pour permettre au son qui a traversé le passage non plan enroulé (50)(50') de s'échapper de l'enceinte (20)(20'), la sortie de ligne de transmission comprenant une ouverture annulaire (28B)(28A') située sur la face avant (20A)(20A') de l'enceinte (20)(20') ; et
une sortie de pilote (28A)(28A') située sur la face avant (20A)(20A') de l'enceinte (20)(20') pour transmettre le son rayonné par le haut-parleur de graves (40)(40') vers l'avant afin de pénétrer dans une zone d'écoute extérieure à l'enceinte (20)(20').

2. Haut-parleur (10)(10') selon la revendication 1 :
le haut-parleur de graves (40)(40') étant monté avec un diaphragme (42)(42') orienté pour émettre vers l'arrière par rapport à l'enceinte (20)(20') ; et
la chambre (22)(22') s'étendant sensiblement parallèlement à l'axe central du diaphragme (42)(42') vers une ouverture (24)(24') à une extrémité arrière de l'enceinte (20)(20').

3. Haut-parleur (10)(10') selon la revendication 1 ou 2, le haut-parleur (10)(10') comprenant un pilote haute fréquence ou milieu de gamme émettant vers l'avant (32, 34)(32', 34') monté dans l'ouverture annulaire (28B)(28A') de la sortie de ligne de transmission.

4. Haut-parleur (10)(10') selon la revendication 3, le pilote haute fréquence ou milieu de gamme émettant vers l'avant (32, 34)(32', 34') étant monté sur la partie de baffle centrale (21)(21').

5. Haut-parleur (10') selon l'une quelconque des revendications précédentes, la sortie de pilote étant assurée par l'ouverture annulaire (28A') de la sortie de ligne de transmission.

6. Haut-parleur (10)(10') selon la revendication 1, le passage non plan enroulé (50)(50') définissant un chemin d'écoulement d'air comprenant une section avec des composants s'étendant : radialement ou circonférentiellement par rapport à l'axe central ; et longitudinalement par rapport à l'axe central.

7. Haut-parleur (10)(10') selon l'une quelconque des revendications précédentes, l'ouverture annulaire (28B)(28A') de la sortie de ligne de transmission étant sensiblement concentrique avec le pilote de basses (40)(40').

8. Haut-parleur (10)(10') selon l'une quelconque des revendications précédentes, l'enceinte (20)(20') comprenant une partie de corps dans laquelle s'étend le passage non plan enroulé (50)(50'), la surface de section transversale de la partie de corps conique diminuant à mesure que la distance par rapport au pilote de graves (40)(40') augmente.

9. Haut-parleur (10)(10') selon l'une quelconque des revendications précédentes, le passage non plan enroulé (50)(50') comprenant un passage hélicoïdal définissant un chemin s'étendant circonférentiellement autour de l'axe central et longitudinalement le long de l'axe central.

10. Haut-parleur (10)(10') selon la revendication 9, l'enceinte (20)(20') comprenant une enveloppe extérieure (21A) et une enveloppe intérieure (21B), et le passage hélicoïdal étant défini par une paroi en saillie hélicoïdale (21C) s'étendant entre les surfaces intérieures (25A) de l'enveloppe extérieure (21A) et les surfaces extérieures (25B) de l'enveloppe intérieure (21B).

11. Haut-parleur (10)(10') selon l'une quelconque des revendications 1 à 8, le passage non plan enroulé (50)(50') comprenant un passage allongé sensiblement annulaire plié dans deux plans orthogonaux en au moins un point le long de sa longueur longitudinale pour former une pluralité de passages concentriques.

12. Haut-parleur (10)(10') selon la revendication 11, le passage sensiblement annulaire étant replié en plusieurs points sur sa longueur.

13. Haut-parleur (10)(10') selon l'une quelconque des revendications précédentes, l'enceinte (20)(20') comprenant le passage non plan enroulé (50)(50') étant formée à l'aide d'un procédé de fabrication additif.

14. Haut-parleur (10)(10') selon la revendication 13, le haut-parleur (10)(10') comprenant au moins une région d'amortissement acoustique (60) dans le passage non plan enroulé (50)(50'), l'au moins une région d'amortissement acoustique (60) comprenant une structure solide perméable à l'air (62) comprenant un réseau de vides interconnectés (64) s'étendant sensiblement à travers la structure solide et définissant un chemin d'écoulement amorti à travers la structure solide.

15. Haut-parleur (10)(10') selon la revendication 14, l'au moins une zone d'amortissement (60) étant formée d'un seul tenant dans le passage non plan enroulé (50)(50').

16. Procédé de fabrication d'un haut-parleur (10)(10') selon l'une quelconque des revendications précédentes, comprenant les étapes consistant à :
former l'enceinte (20)(20') à l'aide d'un procédé de fabrication additif ;
l'enceinte (20)(20') étant formée d'une seule pièce avec le passage non plan enroulé (50)(50') pour recevoir le son rayonné vers l'arrière s'étendant à travers le corps d'enceinte (20)(20').
